Europäisches Patentamt

European Patent Office

Office européen des brevets

(19)

(11) Veröffentlichungsnummer: **0 186 021**
**B1**

(12) EUROPÄISCHE PATENTSCHRIFT

(45) Veröffentlichungstag der Patentschrift: 24.10.90

(21) Anmeldenummer: 85115600.0

(22) Anmeldetag: 07.12.85

(51) Int. Cl.⁵: **B 03 B 7/00**, B 04 C 9/00

(54) Anordnung zur Sandrückgewinnung insbesondere Feinsandrückgewinnung.

(30) Priorität: 14.12.84 DE 3445536

(43) Veröffentlichungstag der Anmeldung:
02.07.86 Patentblatt 86/27

(45) Bekanntmachung des Hinweises auf die
Patenterteilung:
24.10.90 Patentblatt 90/43

(84) Benannte Vertragsstaaten:
AT BE CH DE FR GB IT LI LU NL SE

(56) Entgegenhaltungen:
FR-A-2 279 647
FR-A-2 452 322

AUFBEREITUNGS-TECHNIK, Band 13, Nr. 2,
Februar 1972, Seiten 97-100, Wiesbaden, DE; H.
GÄRTNER: "Die Beherrschung grosser Sand-
und Wassermengen im Saugbaggerbetrieb"

(73) Patentinhaber: **Firma AMBERGER
KAOLINWERKE GMBH
Georg Schiffer Strasse 70
D-8452 Hirschau (DE)**

(72) Erfinder: **Donhauser, Friedrich, Dipl.-Ing.
Kolumbusstrasse 62
D-8450 Amberg (DE)**

(74) Vertreter: **Richter, Bernhard, Dipl.-Ing.
Beethovenstrasse 10
D-8500 Nürnberg 20 (DE)**

(56) Entgegenhaltungen:
AUFBEREITUNGS-TECHNIK, Band 17, Nr. 4,
April 1976, Seiten 196-202, Wiesbaden, DE; H.
TRAWINSKI et al.: "Vorentwässerung und
Rückgewinnung von Industriesanden in
Hydrozyklonen und deren Fraktionierung in
Aufstromklassierern"

**Beschreibung**

Die Erfindung betrifft eine Anordnung zur Sand- insbesondere Feinstsandrückgewinnung aus mit Sand versetztem Baggerwasser, bestehend aus mindestens einer Trennvorrichtung, z.B. Schöpfrad oder Sieb, durch die eine teilweise Trennung des Wassers vom Sand sowie eine Ableitung dieses noch mit Sand versetzten Wassers erfolgt, und mit einem der Trennvorrichtung nachgeschalteten Vorabscheidehydrozyklon und einem diesem nachgeschalteten Nacheindickhydrozyklon, wobei zwischen dem Überlauf der Trennvorrichtung und dem darunter angeordneten Zulauf des Vorabscheidehydrozyklons eine ausreichende Gefällehöhe vorgesehen ist (welche 4—6 m betragen kann) und wobei der Öberlauf des Vorabscheidehydrozyklons in einen Klärteich oder in das zu baggernde Gewässer abgeleitet wird. Eine solche Anordnung ist aus der Veröffentlichung ''Aufbereitungs-Technik'' Jahrgang 1972, Nr. 2 Seiten 98 bis 100, und zwar Bild 2, bekannt, wobei angenommen wird, daß der zu diesem Bild 2 zitierte Überströmsilo eine Trennvorrichtung im o.g. Sinne beinhaltet. Dabei ist Zwischen dem Unterlauf des vertikal angeordneten Vorabscheide-Hydrozyklons und dem Zulauf des in gleicher Höhe wie der Vorab- scheide-Hydrozyklon vorgesehenen Nacheindick- hyrozyklons ein Pumpensumpf mit anschlie- ßender Pumpe vorgesehen. Dieser Pumpen- sumpf erstreckt sich vom Unterlauf des Vorabscheide-Hydrozyklons nach unten. Nachdem die engangs genannte Gefällehöhe gemäß der zitierten Vorveröffentlichung 5 bis 6 m betragen soll, andererseits bei derartigen Anordnungen der in der Vertikalen zur Verfügung stehende Raum in seiner Höhe begrenzt ist, ist oft die notwendige Gefällehöhe und zusätzlich noch die Höhe des bei diesem Stand der Technik vorgesehenen Pumpensumpf nicht mehr unterbringbar.

Die Aufgabe der Erfindung besteht demgegenüber darin, unter Beibehaltung der Vorteile einer Anordnung nach dem eingangs zitierten Oberbegriff des Anspruches 1, die vor allem in der energiesparenden Vorabscheidung im Vorabscheide-Hydrozyklon bestehen, dafür zu sorgen, die von einer solchen Anordnung geforderte Bauhöhe und Baukosten zu verringern.

Zur Lösung dieser Aufgabe ist, ausgehend vom eingangs zitierten Oberbegriff des Anspruches 1 vorgesehen, daß an den Unterlauf des Vorabscheide-Hydrozyklons unmittelbar ohne Zwischenschaltung eines Pumpensumpfes eine Druckerhöhungspumpe angeschlossen ist, deren Druckseite mit dem Zulauf des Nacheindickhydrozyklons verbunden ist. Est hat sich überraschenderweise gezeigt, daß auch bei Wegfall eines Pumpensumpfes der Unterlauf des Vorabscheide- Hydrozyklons einwandfrei in eine Pumpe eingegeben und von dieser an den Nachabscheide- Hydrozyklon weitergeleitet werden kann. Es wird der große Energieaufwand vermieden, wie er bei anderen vorbekannten Anordnungen auftritt, bei denen eine Pumpe mit Pumpensumpf zwischen Trennvorrichtung und Hydrozyklon vorgesehen ist. Der beim Einsatz der Anordnung nach der Erfindung erforderliche Energiebedarf beträgt nur etwa 5% des Energiebedarfes, der bei dem zuvor erläuterten Stand der Technik erforderlich war. Hinzu kommt der Vorteil des Wegfallens einer voluminösen Pumpe für den Zulauf zum Vorabscheide-Hydrozyklon. Die nach der Erfindung unmittelbar an den Unterlauf des Vorabscheide- Hydrozyklon angeschlossene Druckerhöhungspumpe kann relativ klein gehalten werden, da sie nur noch den Unterlauf des Vorabscheide-Hydrozyklon bewältigen muß, nicht aber den demgegenüber wesentlich umfangreicheren Überlauf des Vorabscheide-Hydrozyklons. Die Druckerhöhungspumpe nimmt daher auch entsprechend wenig an Raum ein. Außerdem wird dadurch an Baukosten gespart.

Durch die aus dem Stand der Technik an sich bekannte Hintereinanderschaltung zweier Hydrozyklone erfolgt eines genügende Eindickung dieser Sande und Rückgewinnung in Trennkorngrößen zwischen 60 bis 80 μm einerseits und 300 bis 500 μm andererseits. Die im Durchmesser unter 60 μm liegenden, bei solchen Sanden mit anfallenden tonhaltigen Feinstkörner sind sowieso unerwünscht.

Durch den Wegfall des Pumpensumpfes und durch die relativ kleinen Abmessungen der Pumpe wird die zusätzlich zur Gefällenhöhe noch erforderliche Bauhöhe der Anordnung gegenüber dem Stand der Technik wesentlich reduziert. Dies ermöglicht in einer Reihe von Fällen überhaupt erst den Einsatz einer solchen Anordnung. Kosten verursachende und in manchen Fällen garnicht durchführbare Aufwendungen zur Erhöhung der Gesamtbauhöhe entfallen, wobei sich die Gesamtbauhöhe aus der Gefällehöhe und der vorgenannten zusätzlichen Bauhöhe zusammensetzt Außerdem ergibt sich aus der Reduzierung der Gesamtbauhöhe vorteilhafterweise auch eine Reduzierung derjenigen Höhe, um welche die Druckerhöhungspumpe den Unterlauf zum Nacheindick-Hydrozyklen hochpumpen muß. Hieraus resultiert eine weitere Energieeinsparung.

Die o.g. bewußte Vermeidung eines Pumpensumpfes zwischen Unterlauf des Vorabscheide- Hydrozyklons und der Druckerhöhungspumpe erbringt also mehrere Vorteile. Ferner saugt die Druckerhöhungspumpe den Unterlauf des Vorabscheide-Hydrozyklons an, was eine Herabsetzung der Trennkorngröße auf die gemäß obigen Ausführungen angestrebte untere Grenze von 60 bis 80 μm ermöglicht.

Eine bevorzugte Ausführungsform der Erfindung besteht gemäß Anspruch 2 darin, daß der Vorabscheide-Hydrozyklon etwa liegend angeordnet ist. Hierdurch wird eine möglichst gradlinige Zufuhr des Überlaufes der Trennvorrichtung in den Zulauf des Hydrozyklons und Abfuhr des Unterlaufs des Hydrozyklons durch die Druckerhöhungspumpe erreicht, einschließlich einer Reduzierung der vom Pumpenausgang bis Eingang des Nacheindick-Hydrozyklons durch die Pumpenleistung zu überwindenden Höhe. Zum zweiten ergibt sich hieraus eine weitere Reduzierung der Bauhöhe der gesamten Anlage.

Der Nacheindick-Hydrozyklon kann höher als der Vorabscheide-Hydrozyklon angeordnet sein. Hierbei kann gemäß weiteren Vorschlägen der Erfindung der Unterlauf dieses Nacheindick-Hydrozyklons entweder eine Ableitung zu dem Bereich der Trennvorrichtung besitzen, der bereits entwässerten Sand führt, oder aber eine Ableitung zu einer weiteren Entwässerungsvorrichtung (z.B. Schwingsieb oder Planfilter) aufweisen.

Gemäß Anspruch 8 kann nach der Erfindung im Unterlauf des Vorabscheide-Hydrozyklons ein die voreingedickte Sandsuspension des Unterlaufes zwar durchlassender, aber deren Drall brechender Einsatz aus verschleißfestem Material vorgesehen sein. Dadurch werden Kavitationen in der Druckerhöhungspumpe vermieden. Dieser Einsatz kann Krauzform haben. In dem Zusammenhang ist es ferner nach einem weiteren Vorschlag der Erfindung von Vorteil, daß in dem Unterlauf des Vorabscheide-Hydrozyklons eine Apex-Düse mit einem den Durchtrittsquerschnitt für die Unterlaufsuspension verringernden Durchgang bzw. Bohrung vorgesehen ist, um die sich im Bereich der Längsachse des Vorabscheide-Hydrozyklons bildende Lufttrombe nicht mehr zur Druckerhöhungspumpe hin durchzulassen. Schließlich sieht die Erfindung in diesem Zusammenhang den weiteren Vorschlag vor, daß in der Strömungsrichtung der Unterlaufsuspension der Einsatz der Apex-Düse nachgeordnet ist, wobei beide Teile sich bevorzugt im engsten Bereich des Unterlaufes befinden.

Weitere Vorteile und Merkmale der Erfindung sind den weiteren Ansprüchen, sowie den nachstehenden Ausführungen und der zugehörigen Zeichnung von erfindungsgemäßen bevorzugten Ausführungsbeispielen zu entnehmen. In der Zeichnung zeigt:

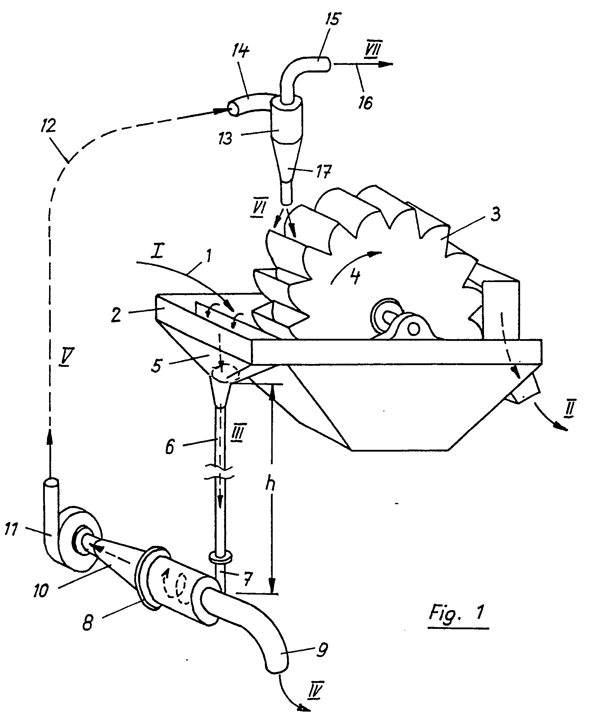

Fig. 1: schematisch und in perspektivischer Ansicht den Aufbau einer Anordnung nach der Erfindung zur Durchführung des erfindungsgemäßen Verfahrens,

Fig. 2: in vergrößertem Maßstab einen Längsschnitt durch den Unterlaufbereich des Vorabscheide-Hydrozyklons und die Pumpe,

Fig. 3: einen Querschnitt gegenüber Fig. 2 im vergrößerten Maßstab gemäß der Linie III—III in Fig. 2.

Das Rohgut wird gemäß Pfeil 1 in eine Trennvorrichtung gegeben. Dies ist gemäß dem Ausführungsbeispiel ein Schöpfrad 3 mit Schöpfrad-Wanne 2, in welche das Rohgut eingeführt wird. Es könnte aber auch als Trennvorrichtung ein Sieb oder dergleichen vorgesehen sein. Das Schöpfrad 3 läuft in Pfeilrichtung 4 um. Der Überlaufstrom der Schöpfrad-Wanne wird gemäß Pfeil 5 einem Rohr 6 zugeleitet, durch das er im freien Fall dem Zulauf 7 eines Vorabscheide-Hydrozyklons 8 zugeführt wird. Hierdurch erhält der Überlaufstrom die nötige Einlaufgeschwindigkeit in diesen Zulauf 7, um im Vorabscheide-Hydrozyklon 8, der bevorzugt etwa liegend angeordnet ist, die gewünschte Abscheidung zu erreichen. Die Gefällehöhe h des vogenannten freien Falles kann 4—6 m betragen.

Der überlauf 9 des Vorabscheide-Hydrozyklons 8 führt das trübe Schwallwasser entweder in einen Klärteich oder in das auszubaggernde Gewässer zurück. Hierdurch werden bis zu 95% des Ballastwassers abgestoßen. Bei den geringen Feststoffgehalten des Überlaufstromes 5 der Wanne 2 von etwa 1 Gewichts% (0,4 Vol.%) und den geringen Anforderung an die Vor- oder Zwischeneindickung durch den Vorabscheide-Hydrozyklon 8 auf etwa 10 Gewichts% (4 Vol.%) können Hyrozyklone großer Kapazität (z.B. je 250 bis 500 m³/h bei 500 bzw. 750 mm Ø) als Vorabscheide-Hydrozyklon 8 eingesetzt werden, um die obengenannte Trennkorngroße von etwa 70 µm zu erreichen. Der Vorabscheide-Hydrozyklon 8 und die Pumpe 11 können in einer kleinen Baugrube untergebracht sein, von wo aus der Überlauf 9 über eine Dükerleitung dem Klärteich bzw. dem Baggersee zugeführt wird.

Die kleine Restmenge an voreingedickter Sand-Suspension wird aus dem Unterlauf 10 des Vorabscheide-Hydrozyklons 8 direkt einer Druckerhöhungspumpe 11 zugeführt, d.h. es ist aus den eingangs genannten Gründen zwischen Unterlauf 10 des Vorabscheide-Hydrozyklons und der Pumpe 11 kein Pumpensumpf zwischengeschaltet.

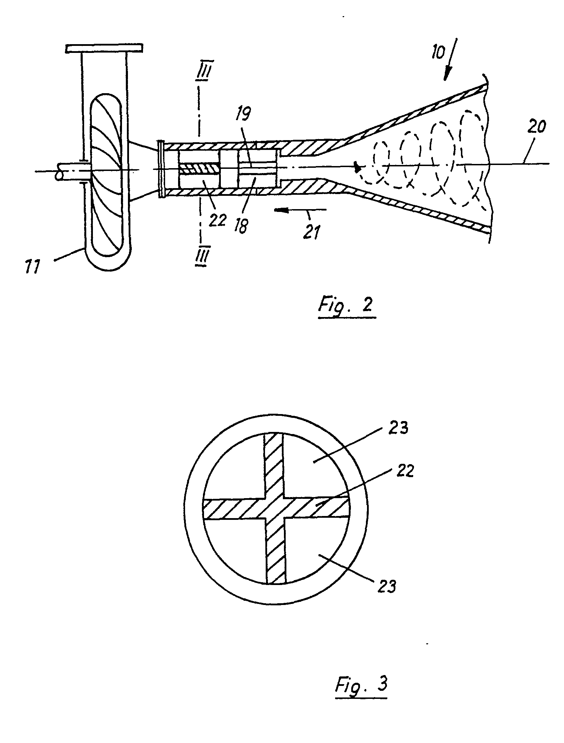

Fig. 2 zeigt im vergroßerten Maßstab den Unterlauf 10 des Vorabscheide-Hydrozyklons, in dem sich eine Apex-Düse 18 befindet, welche dan Durchtrittsquerschnitt des Unterlaufes auf den Durchmesser einer durch die Apex-Düse 18 hindurchgehenden Öffnung oder Bohrung 19 reduziert. Damit wird die Lufttrombe, die sich im Bereich der Längsachse 20 des Hydrozyklons 8 in dessen Unterlauf befindet, nicht mehr zur Pumpe 11 hin durchgelassen. Dies würden den Pumpenbetrieb beeinträchtigen bzw. stören. In der Strömungsrichtung 21 der Suspension des Unterlaufes ist der Apex-Düse 18 ein Einsatz 22, hier in Form eines Kreuzes (siehe Fig. 3), nachgeschaltet. Dieser Einsatz läßt zwar Durchtrittsöffnungen 23 für die voreingedickte Sandsuspension des Unterlaufes 10 frei, bricht aber deren Drall, d.h. ihre Rotation um die Längsachse 20, die ihr im Hydrozyklon vermittelt wurde. Dadurch werden Kavitationen in der Pumpe 11 vermieden. Der Einsatz 22 besteht aus einem verschleißfesten Material, wie einem entsprechend harten Blech oder einem verschleißfesten Kunststoff. Er ist, ebenso wie die Apex-Düsem, im engsten Bereich des Unterlaufes vorgesehen und befindet sich bereits im Einzugsbereich der Pumpe 11.

Die Druckerhöhungspumpe 11 führt die voreingedickte Suspension über eine Leitung 12 einem Nacheindick-Hydrozyklon 13 zu, der z.B. 300 mm Ø haben kann. Dieser Nacheindick-Hydrozyklon (Klärhydrozyklon) kann gemäß Zeichnung so angeordnet sein, daß sein Unterlauf-Schlammstrom, der also den nochmals eingedickten Sand, d.h. das erzielte Produkt, nämlich einen Feinstsand mit Restfeuchte enthält, den Schöpfbechern des Schöpfrades 3 aufgegeben wird, nachdem diese den Füllpegel der Wanne verlassen haben. Die Grobsandfüllung dieser Schöpfbecher wirkt dann als Anschwemmschicht. Hierdurch wird eine nachteilige Rückvermischung des gewonnenen Feinstsandes mit dem Schwallwasser in der Schöpfradwanne 2 vermieden. Sofern die Feinstsandfraktion zwischen etwa 70 und 400 µm (0,7 bis 0,4 mm) gesondert gewonnen werden soll, wird sie nicht der in den Schöpfbechern vorhandenen Grobfraktion des Sandes beigemischt, sondern neben dem Schöpfrad oberhalb einer geeigneten Entwässerungsvorrichtung (z.B. Schwingsieb oder Planfilter) ausgetragen.

Die Hydrozyklon-Kapazitäten können durch Variation der Nenndurchmesser und Anzahl der parallel geschalteten Einheiten der Leistung des Schöpfrades bequem angepaßt werden. So können Anlagen beliebiger Größe konzipiert werden (z.B. 500 bis 10 000 m³/h). Diese haben Versuche erfolgreich bestätigt.

Durch Nachschalten von Stromklassierern oder Hydrozyklonen können aus dem gewonnenen Sand Fraktionen hergestellt werden, aus denen man synthetische Industriesande mit Sollkörnung durch partielle Rückvermischung gewinnt.

Nachstehend werden in einer Tabelle Bilanzwerte für ein praxisnahes Beispiel angegeben. Dabei ist die Förderleistung des Saugbaggers mit 1500 m³/h angesetzt worden. Der Sandverlust wird von 10 t/h (13%) auf 4 t/h tonhaltigen Feinstand (5%) reduziert. Dabei sind die laufenden Nummern mit den römischen Ziffern I bis VII angegeben. In der erläuterten Zeichnung sind dieses römischen Ziffern an den Stellen eingetragen, an denen diese Mengen auftreten. Darin bezeichnen "m³/h" den Wasserchurchsatz pro Stunde, "t/h" den Sanddurchsatz pro Stunde und "g/l" den Anteil an Sand in g pro Liter (1) Wasser.

| I | 1500 m³/h | 50 g/l | 75 t/h |
| II | 71 t/h | 455 g/l | 156 m³/h |
| III | 10 t/h | 1350 m³/h | 7,4 g/l |
| IV | 3 t/h | 1280 m³/h | 2,3 g/l |
| V | 7 t/h | 100 g/l | 70 m³/h |
| VI | 6 t/h | 1000 g/l | 6 m³/h |
| VII | 1 t/h | 64 m³/h | 15,6 g/l |

## Patentansprüche

1. Anordnung zur Sand- insbesondere Feinstsandrückgewinnung aus mit Sand versetztem Baggerwasser, bestehend aus mindestens einer Trennvorrichtung, z.B. Schöpfrad oder Sieb, durch die eine teilweise Trennung des Wassers vom Sand sowie eine Ableitung dieses noch mit Sand versetzten Wassers erfolgt, und mit einem der Trennvorrichtung nachgeschalteten Vorabscheidehydrozyklon (8) und einem diesem nachgeschalteten Nacheindickhydrozyklon (13), wobei zwischen dem Überlauf der Trennvorrichtung (3) und dem darunter angeordneten Zulauf (7) des Vorabscheidehydrozyklons (8) eine ausreichende Gefällehöhe (h) vorgesehen ist und wobei der Überlauf (9) des Vorabscheidehydrozyklons (8) in einen Klärteich oder in das zu baggernde Gewässer abgeleitet wird, dadurch gekennzeichnet, daß an den Unterlauf (10) des Vorabscheide-hydrozyklons unmittelbar ohne Zwischenschaltung eines Pumpensumpfes eine Druckerhöhungspumpe (11) angeschlossen ist, deren Druckseite mit dem Zulauf des Nacheindickhydrozyklons (13) verbunden ist.

2. Anordnung nach Anspruch 1, dadurch gekennzeichnet, daß der Vorabscheide-Hydrozyklon (8) etwa liegend angeordnet ist.

3. Anordnung nach Anspruch 1 oder 2, dadurch gekennzeichnet, daß der Nacheindickhydrozyklon (13) höher als der Vorabscheide-Hydrozyklon (8) angeordnet ist.

4. Anordnung nach einem der Ansprüche 1 bis 3, dadurch gekennzeichnet, daß der Unterlauf (17) des höher als die Trennvorrichtung (3) gelegenen Nacheindickhydrozyklons (13) eine Ableitung zu dem Bereich der Trennvorrichtung (3) besitzt, der bereits entwässerten Sand führt.

5. Anordnung nach einem der Ansprüche 1 bis 3, dadurch gekennzeichnet, daß der Unterlauf (17) des Nacheindickhydrozyklons (13) eine Ableitung zu einer weiteren Entwässerungsvorrichtung (z.B. Schwingsieb oder Planfilter) besitzt.

6. Anordnung nach einem der Ansprüche 1 bis 5, dadurch gekennzeichnet, daß die Abmessungen des Vorabscheidehydrozyklons (8) größer sind als die des Nacheindickhydrozyklons (13).

7. Anordnung nach einem der Ansprüche 1 bis 6, dadurch gekennzeichnet, daß für die Aufnahme des Überlaufstromes (5) zwischen Überlauf der Trennvorrichtung (3) und Zulauf (7) des Vorabscheideshydrozyklons (8) ein den Überstromlauf (5) führendes Rohr (6) vorgesehen ist.

8. Anordnung nach einem der Ansprüche 1 bis 7, dadurch gekennzeichnet, daß im Unterlauf (10) des Vorabscheide-Hydrozyklons (8) ein die voreingedickte Sandsuspension des Unterlaufs zwar durchlassender, aber deren Drall brechender Einsatz (22) aus verschleißfestem Material vorgesehen ist.

9. Anordnung nach Anspruch 8, dadurch gekennzeichnet, daß der Einsatz (22) im Querschnitt Kreuzform hat.

10. Anordnung nach einem der Ansprüche 1 bis 9, dadurch gekennzeichnet, daß in dem Unterlauf (10) des Vorabscheide-Hydrozyklons (8) eine Apex-Düse (18) mit einem den Durchtrittsquerschnitt für die Unterlaufsuspension verringernden Durchgang bzw. Bohrung (19) vorgesehen ist.

11. Anordnung nach Anspruch 10, dadurch gekennzeichnet, daß in der Strömungsrichtung (21) der Unterlaufsuspension der Einsatz (22) der Apex-Düse (18) nachgeordnet ist, wobei beide Teile sich bevorzugt im engsten Bereich des Unterlaufes (19) befinden.

## Revendications

1. Dispositif pour récupérer du sable, et en particulier du sable très fin, dans de l'eau de dragage mélangée à du sable, composé d'au moins un dispositif de séparation, par exemple une roue à augets ou un tamis, grâce auquel a lieu une séparation partielle de l'eau et du sable, ainsi qu'une dérivation de cette eau encore mélangée de sable, et comprenant un hydrocyclone de préfractionnement (8) monté en aval du dispositif de séparation et un hydrocyclone de post-épaississement (13) monté en aval de celui-ci, cependant qu'une hauteur de chute (h) suffisante est prévue entre le trop-plein du dispositif de séparation (3) et l'alimentation (7) de l'hydrocyclone de préfractionnement (8) qui est disposée au-dessous, et que la surverse (9) de l'hydrocyclone de préfractionnement (8) est dérivée vers un bassin de decantation ou vers les eaux à draguer, caractérisé par le fait qu'à la sousverse (10) de l'hydrocyclone de préfractionnement est raccordée directement, sans interposition d'un puisard d'aspiration, une pompe de surpression (11) dont le côté du refoulement est relié à l'alimentation de l'hydrocyclone de post-épaississement (13).

2. Dispositif selon la revendication 1, caractérisé par le fait que l'hydrocyclone de préfractionnement (8) est disposé à peu près horizontalement.

3. Dispositif selon la revendication 1 ou 2, caractérisé par le fait que l'hydrocyclone de post-épaissement (13) est disposé plus haut que l'hydrocyclone de préfractionnement (8).

4. Dispositif selon l'une des revendications 1 à 3, caractérisé par le fait que la sousverse (17) de l'hydrocyclone de post-épaississement (13), qui est situé plus haut que le dispositif de séparation (3), comporte une dérivation vers la région du dispositif de séparation (3) qui conduit du sable d'ou de l'eau a déjà été éliminée.

5. Dispositif selon l'une des revendications 1 à 3, caractérisé par le fait que la sousverse (17) de l'hydrocyclone de post-épaississement (13) comporte une dérivation vers un autre dispositif d'élimination de l'eau (par exemple un tamis oscillant ou un filtre plan).

6. Dispositif selon l'une des revendications 1 à 5, caractérisé par le fait que les dimensions de l'hydrocyclone de préfractionnement (8) sont supérieures à celles de l'hydrocyclone de post-épaississement (13).

7. Dispositif selon l'une des revendications 1 à 6, caractérisé par le fait que, pour recevoir le courant de trop-plein (5) entre le trop-plein du dispositif de séparation (3) et l'alimentation (7) de l'hydrocyclone de préfractionnement (8), il est prévu un tube (6) qui conduit le courant de trop-plein (5).

8. Dispositif selon l'une des revendications 1 à 7, caractérisé par le fait qu'il est prévu dans la sousverse (10) de l'hydrocarbone de préfractionnement (8) un insert (22) en une matière résistante à l'usure qui laisse effectivement passer la suspension de sable de la sousverse ayant subi un épaississement préalable, mais qui brise son tourbillonnement.

9. Dispositif selon l'une des revendication 8, caractérisé par le fait que l'insert (22) présente la forme d'une croix en section transversale.

10. Dispositif selon l'une des revendications 1 à 9, caractérisé par le fait qu'il est prévu dans la sousverse (10) de l'hydrocyclone de préfractionnement (8) un apex (18) comprenant un passage ou, respectivement, un perçage (19) qui diminue la section transversale de passage destinée à la suspension de la sousverse.

11. Dispositif selon la revendication 11, caractérisé par le fait que l'insert (22) est monté en aval de l'apex (18) dans la direction d'écoulement (21) de la suspension de la sousverse, ces deux organes se trouvant de préférence dans la zone la plus étroite de la sousverse (10).

## Claims

1. Arrangement for the recovery of sand, in particular finest sand, from dredger water mixed with sand, the arrangement consisting of at least one separating device, for example a scoop wheel or a sieve, by which a partial separation of the water from the sand as well as a removal of this water still mixed with sand takes place, with a preliminarily separating hydro-cyclone (8) connected behind the separating device and a reconcentrating hydro-cyclone (13) connected therebehind, wherein an adequate head (h) is provided between the overflow of the separating device (3) and the inlet (7) of the preliminary separating hydro-cyclone (8) arranged thereunder and wherein the overflow (9) of the preliminarily separating hydro-cyclone (8) is conducted away into a settling pool or into the waters to be dredged, characterised thereby, that a pressure-boosting pump (11), the pressure side of which is connected with the inlet of the reconcentrating hydro-cyclone (13), is connected directly without interposition of a pump sump to the lower course (10) of preliminarily separating hydro-cyclone.

2. Arrangement according to claim 1, characterised thereby, that the preliminarily separating hydro-cyclone (8) is arranged about horizontally.

3. Arrangement according to claim 1 or 2, characterised thereby, that the reconcentrating hydro-cyclone (13) is arranged to be higher than the preliminarily separating hydro-cyclone (8).

4. Arrangement according to one of the claims 1 to 3, characterised thereby, that the lower course (17) of the reconcentrating hydro-cyclone (13), which is disposed to be higher than the separating device (3), possesses an outlet to that region of the separating device (3), which carries already drained sand.

5. Arrangement according to one of the claims 1 to 3, characterised thereby, that the lower course (17) of the reconcentrating hydro-cyclone (13) possesses an outlet to a further draining equipment (for example vibratory sieve or planar filter).

6. Arrangement according to one of the claims 1 to 5, characterised thereby, that the dimensions of the preliminarily separating hydro-cyclone (8) are greater than those of the reconcentrating hydro-cyclone (13).

7. Arrangement according to one of the claims 1 to 6, characterised thereby, that a pipe (6) carrying the overflow current (5) is provided between the overflow of the separating device (3) and the inlet (7) of the preliminarily separating hydro-cyclone (8) for the reception of the overflow current (5).

8. Arrangement according to one of the claims 1 to 7, characterised thereby, that an insert (22), which through letting through the preliminarily concentrated sand suspension of the lower course, yet breaks the spin thereof, or wear-resistant material is provided in the lower course (10) of the preliminarily separating hydro-cyclone (8).

9. Arrangement according to claim 8, characterised thereby, that the insert (22) is of cruciform cross-section.

10. Arrangement according to one of the claims 1 to 9, characterised thereby, that an apex nozzle (18) with a passage or bore (19), which reduces the throughflow cross-section for the suspension of the lower course, is provided in the lower course (10) of the preliminarily separating hydro-cyclone (8).

11. Arrangement according to claim 10, characterised thereby, that the insert (22) is arranged behind the apex nozzle (18) in the flow direction (21) of the suspension of the lower course, wherein both parts are preferably situated in the narrowest region of the lower course (19).

*Fig. 1*

EP 0 186 021 B1

Fig. 2

Fig. 3

2